# EUROPÄISCHE PATENTSCHRIFT

(11) **EP 1 580 476 B1**
(45) Veröffentlichungstag und Bekanntmachung des Hinweises auf die Patenterteilung: **03.06.2009**
(21) Anmeldenummer: 04006796.9
(22) Anmeldetag: 22.03.2004
(51) Int. Cl.: F16L 27/093, F16L 41/00, F15B 11/04

(54) **Anschlussvorrichtung für Fluidleitungen**
Connector for fluid conduits
Raccord pour conduits de fluide

(43) Veröffentlichungstag der Anmeldung: 28.09.2005
(73) Patentinhaber: FESTO AG & Co. KG, 73734 Esslingen (DE)
(72) Erfinder: Quendt, Volker, 72669 Unterensingen (DE); Packe, Stephan, 73760 Ostfildern (DE)
(74) Vertreter: Abel, Martin

(56) Entgegenhaltungen:
- EP-A- 0 041 007
- EP-A- 0 434 991
- DE-A- 3 338 418
- DE-A- 3 420 646
- DE-A- 10 010 602
- DE-U- 29 717 927
- US-A- 4 651 625

## Beschreibung

Die Erfindung betrifft eine Anschlussvorrichtung zum Anschließen mindestens einer Fluidleitung an eine fluidtechnische Komponente, beispielsweise einen fluidbetätigten Arbeitszylinder, mit einem sich in Richtung einer Befestigungsachse erstreckenden, zur Fixierung an der fluidtechnischen Komponente und gleichzeitig zur Fluidführung vorgesehenen Befestigungsteil und mit einem in Richtung einer zu der Befestigungsachse rechtwinkeligen Hauptachse von dem Befestigungsteil wegragenden Funktionsteil, an dem mindestens eine zum Anschließen einer Fluidleitung geeignete Anschlussöffnung vorgesehen ist, und das mit mindestens einer mit dem im Funktionsteil strömenden Fluid zusammenwirkenden Funktionseinheit ausgestattet ist, die so ausgerichtet ist, dass ihre Längsachse rechtwinkelig zur Befestigungsachse des Befestigungsteils verläuft, wobei das Funktionsteil Flachgestalt aufweist und quer zu seiner Hauptachse über einen länglichen Querschnitt verfügt, dessen Querschnitts-Längsachse rechtwinkelig zur Befestigungsachse ausgerichtet ist.

Bei einer aus der DE 29717927 U1 bekannten Anschlussvorrichtung ist ein Funktionsteil schwenkbar auf ein als Hohlschraube ausgebildetes Befestigungsteil aufgesetzt. Das Befestigungsteil ist in Richtung seiner als Befestigungsachse bezeichenbaren Längsachse in eine dafür vorgesehene Bohrung eines anzusteuernden fluidbetätigten Arbeitszylinders einschraubbar. An dem Funktionsteil findet sich eine Anschlussöffnung zum Anschließen einer Fluidleitung. Außerdem sitzt in dem Funktionsteil eine als Drosseleinrichtung ausgebildete Funktionseinheit, die drosselnd mit dem im Funktionsteil strömenden Fluid zusammenwirkt. Nachteilig bei dieser Anschlussvorrichtung ist die insgesamt recht große Bauhöhe, die auch im an eine fluidtechnische Komponente installierten Zustand zur Folge hat, dass die Gesamtanordnung relativ viel Platz beansprucht.

Mit einer vergleichbaren Situation ist man bei dem in der DE 3338418 A1 beschriebenen Magnetventil konfrontiert. Dort verfügt das Funktionsteil zwar über geringere Höhenabmessungen. Aufgrund des dadurch gleichzeitig verringerten Einbauvolumens ragt jedoch die integrierte Funktionseinheit nach oben hinaus, sodass letztlich wiederum keine Platzeinsparung erzielt wird.

Eine Anordnung der eingangs genannten Art offenbart die US-A-4 651 625. Dort ist eine Anschlussvorrichtung mittels einer Befestigungsschraube an einem Pneumatikzylinder angeschraubt. Die Anschlussvorrichtung enthält ein flaches Funktionsteil mit länglichem Querschnitt, an dem mehrere Anschlussöffnungen für Fluidleitungen ausgebildet sind und das von der Befestigungsschraube durchsetzt ist. Eine vergleichbare Anordnung geht auch aus der EP 00 41 007 A hervor.

Es ist die Aufgabe der vorliegenden Erfindung, eine über kompakte Abmessungen verfügende Anschlussvorrichtung zu schaffen.

Zur Lösung dieser Aufgabe ist als Funktionseinheit in dem Funktionsteil mindestens ein zur Druckerfassung oder zur Durchflusserfassung dienender Sensor angeordnet.

Auf diese Weise kann eine Anschlussvorrichtung mit geringer Bauhöhe realisiert werden, die im an eine fluidtechnische Komponente angeschlossenen Zustand nur wenig aufträgt. Nicht nur die in Richtung der Befestigungsachse gemessene Höhe des Funktionsteils ist reduziert, sondern gleichzeitig die quer dazu verlaufende Breite vergrößert, so dass innerhalb des dadurch erhaltenen länglichen Querschnittes weiterhin genügend Einbauraum zur Verfügung steht, um eine oder mehrere Funktionseinheiten unterzubringen. Besonders vorteilhaft ist es in diesem Zusammenhang, dass die mindestens eine Funktionseinheit derart ausgerichtet im Funktionsteil platziert ist, dass ihre Längsachse ebenfalls rechtwinkelig zur Befestigungsachse des Befestigungsteils verläuft und somit, wie auch die Querschnitts-Längsachse, in einer Ebene ausgerichtet ist, die rechtwinkelig zu der Befestigungsachse verläuft. Als Funktionseinheit(en) ist/sind ein oder mehrere Sensoren zur Drukkerfassung oder zur Durchflusserfassung in dem Funktionsteil integriert.

Vorteilhafte Weiterbildungen der Erfindung gehen aus den Unteransprüchen hervor.

Mindestens eine in dem Funktionsteil angeordnete Funktionseinheit kann als Drosseleinrichtung ausgebildet sein, die eine einstellbare Drosselschraube aufweist, deren Schraubenachse rechtwinkelig zur Befestigungsachse des Befestigungsteils verläuft, und zwar vorzugsweise mit Abstand zur Befestigungsachse quer und insbesondere rechtwinkelig zur Hauptachse des Funktionsteils. Auf diese Weise kann die Einstellung der Drosselungsintensität bequem von der Seite des Funktionsteils her vorgenommen werden, auch wenn die Anschlussvorrichtung an ihrer Oberseite nicht zugänglich sein sollte, beispielsweise aufgrund einer dort platzierten weiteren fluidtechnischen Komponente.

Die mindestens eine Anschlussöffnung ist zweckmäßigerweise rechtwinkelig zur Befestigungsachse und dabei insbesondere in Richtung der Hauptachse orientiert.

Es wäre prinzipiell möglich, ein fest und insbesondere einstückig mit dem Funktionsteil verbundenes Befestigungsteil vorzusehen. Als besonders zweckmäßig hat sich allerdings eine Ausgestaltung als Befestigungsschraube erwiesen, die das Funktionsteil durchsetzt. Hier kann dann auch sehr einfach eine Schwenkbarkeit des Funktionsteils realisiert werden, um dessen winkelmäßige Ausrichtung mit Bezug zur Befestigungsschraube nach Bedarf zu variieren.

Zur Fluidführung könnte die Befestigungsschraube wenigstens partiell als Hohlschraube ausgebildet sein. Höhere Durchflusswerte verspricht jedoch eine Bauform, bei der der Schaft der Befestigungsschraube umfangsseitig mindestens eine und vorzugsweise mehrere, über den Umfang verteilte, längsverlaufende rinnenförmige Strömungsvertiefungen aufweist. Als besonders zweckmäßig wird eine sich diametral gegenüberliegende paarweise Anordnung von Strömungsvertiefungen angesehen.

Innerhalb der Funktionseinheit kann theoretisch eine beliebige Anzahl gleichartiger oder unterschiedlicher Funktionseinheiten untergebracht werden. Als mögliche Ausgestaltungen weiterer Funktionseinheiten können beispielsweise Rückschlagventile, Schnellentlüftungsventile, Drosselventile oder auch elektrisch und/oder fluidisch angesteuerte Steuerventile erwähnt werden.

Bei einem besonders bevorzugten Aufbau des Funktionsteils verfügt dieses über ein mehrteiliges Gehäuse mit einem das Befestigungsteil tragenden Grundkörper und einem an der dem Befestigungsteil entgegengesetzten Stirnseite in den Grundkörper eingesetzten Deckel, wobei der Deckel wenigstens eine Anschlussöffnung für eine Fluidleitung aufweist.

Der Deckel des Gehäuses kann an der Innenseite mit mindestens einer Komponente einer Funktionseinheit bestückt sein, beispielsweise mit einer Rückschlaglippe eines Rückschlagventils.

Nachfolgend wird die Erfindung anhand der beiliegenden Zeichnung näher erläutert. In dieser zeigen:
- Fig. 1: den Endabschnitt eines fluidbetätigten Arbeitszylinders, der mit einer Anschlussvorrichtung bestückt ist, wobei letztere in einer Explosionsdarstellung gezeigt ist,
- Fig. 2: die Anordnung aus Fig. 1 in einer Seitenansicht,
- Fig. 3: die bei der Anordnung gemäß Fig. 1 und 2 eingesetzte Anschlussvorrichtung bei teilweise aufgeschnittenem Gehäuse der Funktionseinheit und in einer Explosionsdarstellung,
- Fig. 4: die Anschlussvorrichtung aus Fig. 3 im Längsschnitt gemäß Schnittlinie IV-IV von unten gesehen,
- Fig. 5: eine Stirnansicht der Anschlussvorrichtung aus Fig. 3 mit Blickrichtung gemäß Pfeil V, die hier mit der Richtung der Hauptachse zusammenfällt,
- Fig. 6: eine Seitenansicht der Anschlussvorrichtung aus Fig. 3 mit Blickrichtung gemäß Pfeil VI, die hier mit der Richtung der Schraubachse zusammenfällt,
- Fig. 7: eine Unteransicht der Anschlussvorrichtung aus Fig. 3 mit Blickrichtung gemäß Pfeil VII,
- Fig. 8: eine Ausführungsform der erfindungsgemäßen Anschlussvorrichtung im an einen fluidbetätigten Arbeitszylinder installierten Zustand, wobei das Gehäuse des Funktionsteils teilweise aufgebrochen dargestellt ist,
- Fig. 9: die bei der Anordnung der Fig. 8 vorgesehene Anschlussvorrichtung in einer perspektivischen Einzeldarstellung,
- Fig. 10: eine weitere Ausführungsform einer Anschlussvorrichtung in einem Längsschnitt analog der Schnittlinie X-X aus Fig. 9,
- Fig. 11: eine weitere alternative Ausführungsform einer mit einem fluidbetätigten Arbeitszylinder kombinierten Anschlussvorrichtung, wobei wiederum das Gehäuse des Funktionsteils teilweise aufgebrochen dargestellt ist,
- Fig. 12: die Anschlussvorrichtung aus Fig. 11 in einer Einzeldarstellung bei aufgebrochenem Gehäuse des Funktionsteils und
- Fig. 13: die Anschlussvorrichtung aus Fig. 12 in einer perspektivischen Komplettansicht.

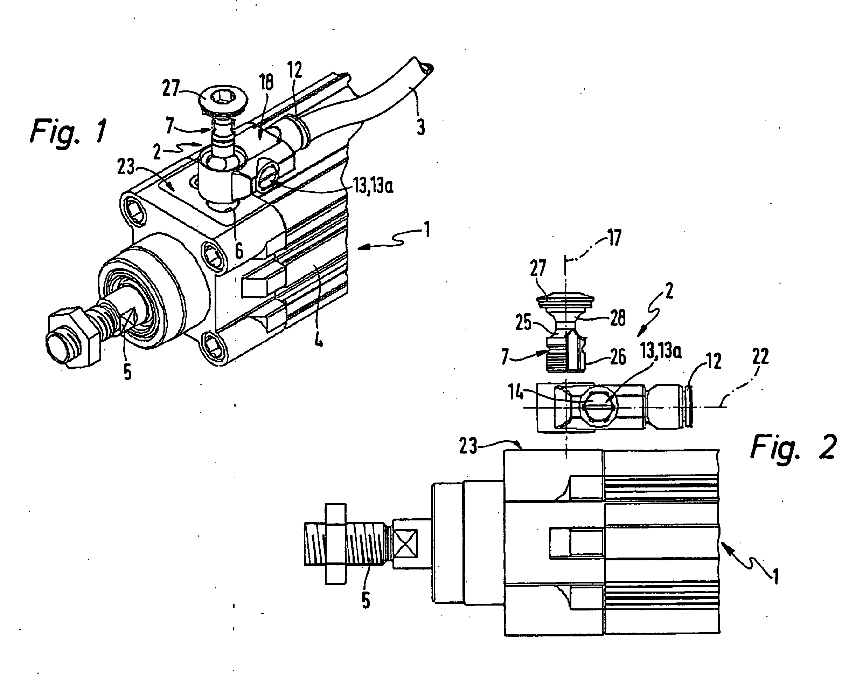

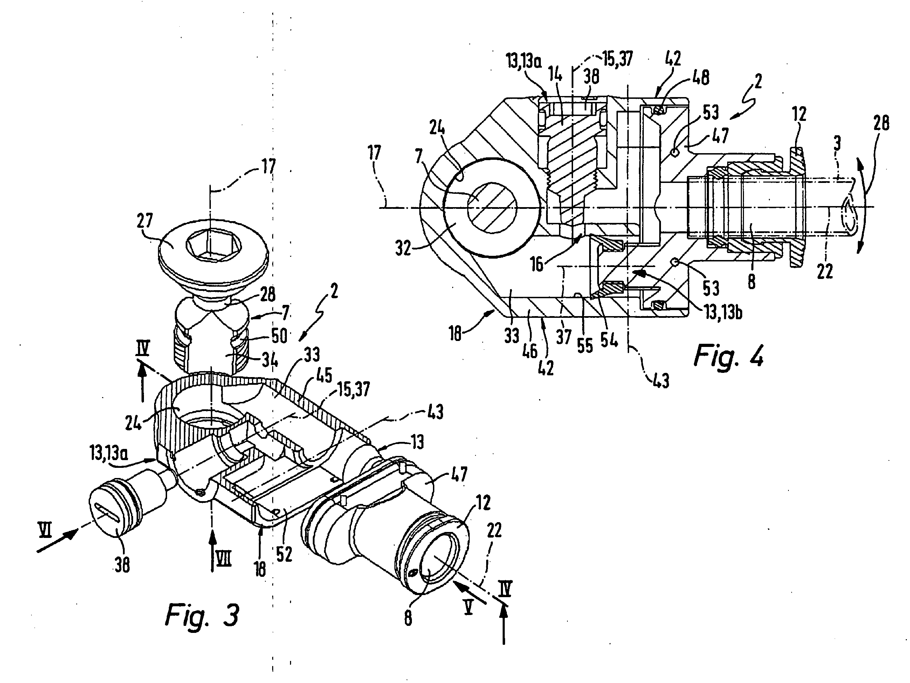

Die Fig. 1 und 2 zeigen den vorderen Endabschnitt einer fluidtechnischen Komponente in Gestalt eines fluidbetätigten Arbeitszylinders 1, der mit einer Anschlussvorrichtung 2 erfindungsgemäßer Bauart bestückt ist, die im Einzelnen auch nochmals aus Fig. 3 bis 7 hervorgeht. Die Anschlussvorrichtung 2 ermöglicht es, den Arbeitszylinder 1 mit einer Fluidleitung 3 zu verbinden, um ein für den Betrieb des Arbeitszylinders 1 erforderliches Druckmedium, insbesondere Druckluft, zuzuführen und/oder abzuführen.

Der Arbeitszylinder 1 verfügt über ein Gehäuse 4, in dem ein nicht näher dargestellter Kolben verschiebbar angeordnet ist, der mit einer Stirnseite einer aus dem Gehäuse 4 herausragenden Kolbenstange 5 verbunden ist. Der Kolben trennt im Gehäuse 4 zwei Arbeitskammern voneinander ab, die jeweils mit einem Fluidkanal verbunden sind, der über einen Kupplungsabschnitt 6 zur Außenfläche des Gehäuses 4 ausmündet. In diesem Kupplungsabschnitt 6 ist die Anschlussvorrichtung 2 über ein Befestigungsteil 7 lösbar fixiert. Für den Anschluss der Fluidleitung 3 besitzt die Anschlussvorrichtung 2 eine Anschlussöffnung 8, der geeignete Haltemittel 12 zugeordnet sind, die unter Abdichtung ein lösbares Fixieren der Fluidleitung 3 gestatten. Die Haltemittel 12 sind insbesondere so ausgebildet, dass sie eine Steckkupplung definieren, die einen Steckanschluss einer Fluidleitung 3 ermöglicht.

In der Zeichnung ist der Arbeitszylinder 1 mit lediglich einer Anschlussvorrichtung 2 ausgestattet. Es versteht sich jedoch, dass ohne weiteres beide Kupplungsabschnitte 6 mit einer Anschlussvorrichtung 2 bestückt sein können, wobei es sich um gleiche oder unterschiedlich ausgestattete Typen von Anschlussvorrichtungen handeln kann.

Die Anschlussvorrichtung 2 eignet sich zur Bestückung beliebiger fluidtechnischer Komponenten. Exemplarisch seien an dieser Stelle neben dem schon erwähnten Arbeitszylinder andere fluidbetätigte Antriebe, Ventile und zur Druckluftaufbereitung dienende Wartungsgeräte erwähnt.

Die Anschlussvorrichtung 2 dient nicht nur zum Herstellen der Fluidverbindung und dem Führen des Fluides, sondern ist durch die Ausstattung mit mindestens einer Funktionseinheit 13 in der Lage, aktiv mit dem strömenden Fluid zusammenzuwirken, sei es, um eine Zustandsänderung dieses Fluides hervorzurufen und/oder um den Zustand oder eine Zustandsänderung des strömenden Fluides wie erfindungsgemäß den Druck oder den Durchfluss zu erfassen. In diesem Zusammenhang ist bei dem Ausführungsbeispiel der Fig. 1 bis 7 wenigstens eine Funktionseinheit 13 als Drosseleinrichtung 13a ausgeführt, mit der sich eine Drosselung des die Anschlussvorrichtung 2 durchströmenden Druckmediums herbeiführen lässt. Um die Drosselungsintensität nach Bedarf zu variieren, verfügt die Drosseleinrichtung 13a über eine Drosselschraube 14, die beim Verdrehen eine Linearbewegung in Richtung ihrer als Schraubenachse 15 bezeichneten Längsachse ausführt und dadurch - je nach Verstellrichtung - den Querschnitt eines Drosselspaltes 16 vergrößert oder verringert.

Die Längsachse des schon erwähnten Befestigungsteils 7 sei als Befestigungsachse 17 bezeichnet. Die mindestens eine Anschlussöffnung 8 befindet sich, wie auch die mindestens eine Funktionseinheit 13, an einem Funktionsteil 18, das mit dem Befestigungsteil 7 zu einer Baugruppe zusammengefasst ist, wobei es mit einer Ausrichtung von dem Befestigungsteil 7 wegragt, bei der seine als Hauptachse 22 bezeichnete Längsachse rechtwinkelig zur Befestigungsachse 17 des Befestigungsteils 7 verläuft. Die Bezeichnung "Funktionsteil" wurde gewählt, weil diese Komponente, wie erwähnt, mindestens ein mit dem in ihr strömenden Fluid zusammenwirkendes Funktionsteil 18 aufweist.

Im an dem Arbeitszylinder 1 installierten Zustand der Antriebsvorrichtung 2 greift das Befestigungsteil 7 in den Kupplungsabschnitt 6 des im Gehäuse 2 verlaufenden Fluidkanals ein und ist darin fixiert. Die Befestigungsachse 17 verläuft dabei in Achsrichtung des Kupplungsabschnittes 6 und zweckmäßigerweise zugleich rechtwinkelig zu der Außenfläche 23 des Gehäuses 4, an der sich die Mündung des Kupplungsabschnittes 6 befindet. Die Hauptachse 22 verläuft dabei mit Abstand parallel zu der Außenfläche 23.

Das Befestigungsteil 7 könnte prinzipiell ein im Rahmen einer Steckbefestigung im Kupplungsabschnitt 6 fixierbares Teil sein. Insbesondere in diesem Fall wäre es möglich, das Befestigungsteil 7 einstückig mit dem Funktionsteil 18 auszubilden. Vorgezogen wird allerdings die in der Zeichnung illustrierte Bauform, bei der das Befestigungsteil 7 eine Befestigungsschraube ist, die mit ihrem Schaft 25 eine kanalartige Durchbrechung 24 des Funktionsteils 18 durchsetzt und mit dem an der Unterseite des Funktionsteils 18 herausragenden Gewindeabschnitt 26 des Schaftes 25 in ein komplementäres Innengewinde des Kupplungsabschnittes 6 eingeschraubt ist. Ein dabei an der Oberseite des Funktionsteils 18 liegender Schraubenkopf 27 beaufschlagt das Funktionsteil 18 in der Richtung der Befestigungsachse 17 und fixiert es am Gehäuse 4.

Beim Ausführungsbeispiel ist das Funktionsteil 18 bei fest angezogenem Befestigungsteil 7 zwischen dem Schraubenkopf 27 und der Außenfläche 23 des Gehäuses 4 fest eingespannt. Solange das Befestigungsteil 7 jedoch noch nicht endgültig festgezogen ist, kann das Funktionsteil 18 gemäß Doppelpfeil 28 um die Befestigungsachse 17 verschwenkt werden, bis eine für den Anschluss der Fluidleitung 3 besonders geeignete winkelmäßige Ausrichtung gefunden ist. Erst anschließend wird das Befestigungsteil 7 mit dem vorgesehenen maximalen Drehmoment festgezogen.

Es wäre allerdings auch eine Ausführungsform möglich, bei der die Komponenten so aufeinander abgestimmt sind, dass sich das Funktionsteil 18 auch bei fest angezogenem Befestigungsteil 7 winkelmäßig positionieren lässt.

Das Befestigungsteil 7 dient nicht nur der Befestigung der Anschlussvorrichtung 2, sondern gleichzeitig auch der Führung des in den bzw. aus dem Arbeitszylinder 1 strömenden Fluides.

Der im montierten Zustand innerhalb der kanalartigen Durchbrechung 24 liegende, einerseits vom Schraubenkopf 27 und andererseits vom Gewindeabschnitt 26 flankierte Längenabschnitt des Schaftes 25 verfügt über eine konzentrische Einschnürung 28. Sie bildet mit der Wandung der kanalartigen Durchbrechung 24 einen Ringraum 32, der mit einem das Funktionsteil 18 durchsetzenden Kanalsystem 33 kommuniziert, mit dem auch die Anschlussöffnung 8 verbunden ist. Das Kanalsystem 33 mündet an der Wandung der Durchbrechung 24 in den Ringraum 32 ein.

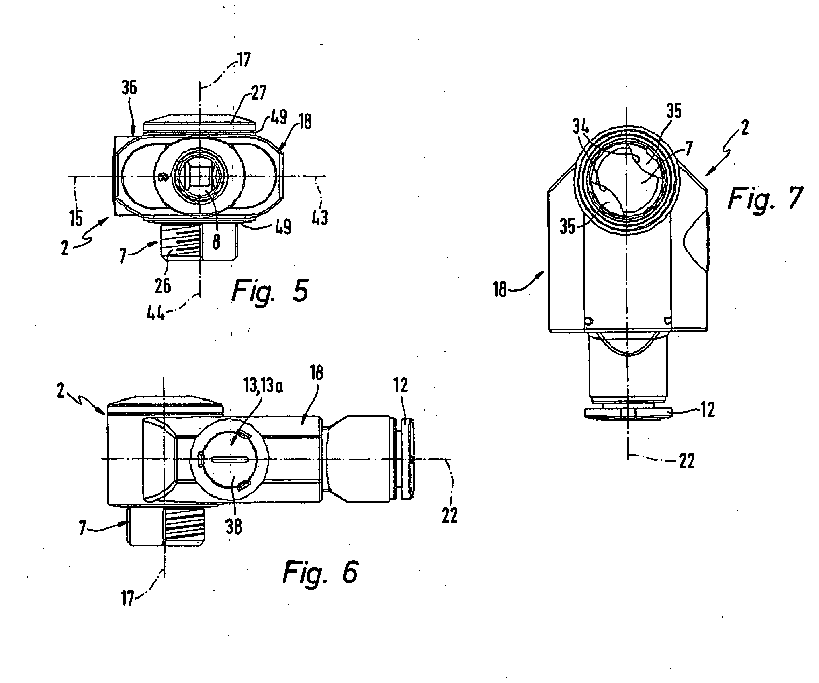

Der sich an der dem Schraubenkopf 27 entgegengesetzten Seite an die Einschnürung 28 anschließende Längenabschnitt des Schaftes 25, der wenigstens teilweise und vorzugsweise über seine gesamte Länge als Gewindeabschnitt 26 ausgebildet ist, ist am Außenumfang mit zwei einander diametral entgegengesetzt platzierten Strömungsvertiefungen 34 ausgebildet, die einen rinnenartigen Charakter haben und die jeweils einenends zu der Einschnürung 28 und andernends zu der dem Schraubenkopf 27 entgegengesetzten Stirnseite des Schaftes 25 ausmünden. Wie insbesondere die Fig. 7 zeigt, kann sich die offene Längsseite der Strömungsvertiefungen 34 ohne weiteres über eine relativ große Bogenlänge des grundsätzlich kreiszylindrischen Gewindeabschnittes 26 erstrecken, wobei vorliegend eine aus einem Bogenwinkel von etwa 90° resultierende Vertiefungsbreite gegeben ist. Die in Umfangsrichtung zwischen den beiden Strömungsvertiefungen 34 verbleibenden Abschnitte des Gewindeschaftes 26 reichen aus, um durch Einschrauben in den Kupplungsschaft 6 die erforderliche Festigkeit zu gewährleisten.

Im in den Kupplungsabschnitt 6 eingeschraubten Zustand des Befestigungsteils 7 begrenzen die Strömungsvertiefungen 34 mit der sie begrenzenden Umfangsfläche des Kupplungsabschnittes 6 jeweils einen Strömungskanal 35, der sich bis in den Ringraum 32 fortsetzt, sodass das Druckmedium in der Lage ist, umfangsseitig am Schaft 25 vorbei zwischen dem Kanalsystem 33 der Funktionseinheit 13 und dem zugeordneten Fluidkanal des Arbeitszylinders 1 überzuströmen.

Prinzipiell ließe sich die Strömungsverbindung auch mit nur einer Strömungsvertiefung 34 realisieren. Mit der Mehrfachanordnung lässt sich allerdings vorteilhaft ein relativ großer Gesamtströmungsquerschnitt verwirklichen, was eine hohe Durchflussrate gewährleistet.

Der Schraubenkopf 27 baut sehr flach, sodass er nur geringfügig über die von der Außenfläche 23 wegweisende Oberseite 36 der Funktionseinheit 13 vorsteht. Denkbar wäre auch eine Bauform, bei der der Schraubenkopf 27 ganz oder teilweise axial versenkt in der Funktionseinheit 13 aufgenommen ist. All dies gewährleistet bei installierter Anschlussvorrichtung 2 eine sehr geringe Bauhöhe, sodass die Anschlussvorrichtung 2 in Richtung der Befestigungsachse 17 nur wenig aufträgt und die Gesamtanordnung aus Arbeitszylinder 1 und Anschlussvorrichtung 2 in der Richtung der Befestigungsachse 17 über sehr kompakte Abmessungen verfügt.

Einen wesentlichen Beitrag für die geringe Bauhöhe der Anschlussvorrichtung 2 liefert auch die Ausrichtung der Funktionseinheiten 13 dergestalt, dass ihre Längsachsen 37 rechtwinkelig zu der Befestigungsachse 17 verlaufen und bei installierter Anschlussvorrichtung 2 praktisch parallel zu der Außenfläche 23 ausgerichtet sind.

Bei der Drosseleinrichtung 13a hat dies eine Ausrichtung der Drosselschraube 14 zur Folge, bei der die Schraubenachse 15 rechtwinkelig zur Befestigungsachse 17 des Befestigungsteils 7 verläuft. Dabei ist es zweckmäßig, die Drosseleinrichtung 13a auf derjenigen Seite der Befestigungsachse 17 im Funktionsteil 18 unterzubringen, wo sich auch die Anschlussöffnung 8 befindet. Zweckmäßig ist dabei eine Anordnung, bei der sich die Drosseleinrichtung 13a zwischen dem Befestigungsteil 7 und der mindestens einen Anschlussöffnung 8 befindet. Letztere ist zweckmäßigerweise rechtwinkelig zu der Befestigungsachse 17 orientiert, wobei sich die beim Ausführungsbeispiel vorgesehene Gleichrichtung mit der Hauptachse 22 als besonders vorteilhaft erwiesen hat, weil sich hier eine besonders gute Zugänglichkeit realisieren lässt. Die Anschlussöffnung 8 mündet zweckmäßigerweise an der der Durchbrechung 24 entgegengesetzten Stirnseite des Funktionsteils 18 aus.

Prinzipiell wäre es möglich, die Drosseleinrichtung 13a so zu platzieren, dass die Schraubenachse 15 mit der Hauptachse 22 zusammenfällt oder parallel zu dieser verläuft. Vorgezogen wird jedoch die aus der Zeichnung ersichtliche Bauform, bei der die Schraubenachse 15 quer und vorzugsweise rechtwinkelig zu der Hauptachse 22 verläuft und dabei gleichzeitig mit Abstand zu der Befestigungsachse 17 angeordnet ist. Bei einer solchen Anordnung liegt die für Einstellmaßnahmen zugängliche Betätigungspartie 38 an einer der schmalen Seitenflächen 42 des Funktionsteils 18, sodass sie bei der aus der Zeichnung ersichtlichen vorteilhaften Längsausrichtung des Funktionsteils 18 bezüglich des Arbeitszylinders 1 von der Seite her für etwa erforderliche Einstellarbeiten sehr gut zugänglich ist.

Dies eröffnet unter anderem auch die Möglichkeit, mehrere Arbeitszylinder so Seite an Seite nebeneinanderliegend anzuordnen, dass die Anschlussvorrichtungen 2 zwischen benachbarten Arbeitszylindern liegen, wobei dann durch den vorhandenen Spalt die Zugänglichkeit für die Betätigungspartie 38 gegeben ist.

Die Betätigungspartie 38 ist insbesondere so ausgebildet, dass sich daran ein Schraubwerkzeug ansetzen lässt, beispielsweise ein Schraubendreher.

Um die niedrige Bauhöhe der Anschlussvorrichtung 2 zu begünstigen, besitzt das Funktionsteil 18 eine flache Gestalt mit einem beispielsweise aus Fig. 3 und 5 gut ersichtlichen länglichen Querschnitt, verbunden mit einer Ausrichtung, bei der die Querschnitts-Längsachse 43 rechtwinkelig zur Befestigungsachse 17 ausgerichtet ist. Die Abmessungen in Richtung der zur Befestigungsachse 17 parallelen Querschnitts-Hochachse 44 sind demgegenüber wesentlich geringer und beschränken sich insbesondere auf das Maß, das erforderlich ist, um die Querschnittsabmessungen der Funktionseinheiten 13 darin unterzubringen.

Durch den länglichen Querschnitt des Funktionsteils 18 hat man die Möglichkeit, Funktionseinheiten 13 quer zu der Hauptachse 22 auszurichten und sie dennoch zu wenigstens dem größten Teil ihrer Baulänge in das Funktionsteil 18 zu integrieren.

Wie schon erwähnt, kann das Funktionsteil 18 über eine praktisch beliebige Anzahl von Funktionseinheiten 13 verfügen. Bei dem in Fig. 1 bis 7 gezeigten Ausführungsbeispiel ist zusätzlich zu der Drosseleinrichtung 13a noch ein Rückschlagventil 13b vorgesehen. Dieses ist innerhalb des Kanalsystems 33 in die Verbindung zwischen den Ringraum 32 und die Anschlussöffnung 8 eingeschaltet, und zwar in Parallelschaltung zur Drosseleinrichtung 13a. Über die Anschlussöffnung 8 eingespeistes Druckmedium kann somit durch das öffnende Rückschlagventil 13b hindurch ungedrosselt zum Arbeitszylinder 1 strömen, während bei entgegengesetzter Strömungsrichtung die Sperrfunktion des Rückschlagventils 13b einsetzt, sodass das Druckmedium dann nur über die Drosseleinrichtung 13a ausströmen kann. Die Sperrrichtung des Rückschlagventils 13b kann allerdings auch vertauscht werden.

Ein besonders vorteilhafter Aufbau des Funktionsteils 18 ergibt sich, wenn dieses - wie insbesondere in Fig. 3 und 4 zum Ausdruck kommt - über ein mehrteiliges Gehäuse 45 verfügt, das einen dem Befestigungsteil 7 zugeordneten Grundkörper 46 und einen an der dem Befestigungsteil 7 entgegengesetzten Stirnseite in den Grundkörper 46 eingesetzten Deckel 47 aufweist. Der Deckel 47 fungiert als Träger für die Haltemittel 12 und definiert die Anschlussöffnung 8. Im Übrigen ist der größte Teil des Kanalsystems 33 in dem Grundkörper 46 ausgebildet.

Der Deckel 47 ist in eine komplementär gestaltete Aufnahme 52 des Grundkörpers 46 eingesteckt, wobei er am Außenumfang eine umlaufende Dichtung 48 aufweist, die an der Innenfläche der Aufnahme 52 dichtend zur Anlage gelangt. Gleichzeitig den Grundkörper 46 und den Deckel 47 durchsetzende Querstifte 53 fixieren den Deckel 47 im Grundkörper 46. Zweckmäßigerweise fungiert der Deckel 47 als Träger für wenigstens eine Komponente einer Funktionseinheit 13, die dadurch bei der Montage des Deckels 47 automatisch ebenfalls installiert wird. Bei dem bevorzugten Ausführungsbeispiel verfügt der Deckel 47 an der dem Grundkörper 46 axial zugewandten Innenseite über einen Fortsatz 54, der eine ringförmige Rückschlaglippe 54 trägt, die zu dem Rückschlagventil 13b gehört. Wird der Deckel 47 in den Grundkörper 46 eingesteckt, taucht die Rückschlaglippe 54 in einen Kanal 55 des Kanalsystems 33 ein, mit dessen Wandung sie zur Bildung des Rückschlagventils 13b kooperiert.

Ohne weiteres könnte der Deckel 47 an der Innenseite auch andere oder weitere Komponenten von Funktionseinheiten 13 aufweisen, die dann bei montiertem Deckel 47 vom Grundkörper 46 umschlossen werden.

Bei der Anschlussvorrichtung 2 sitzen sämtliche Funktionseinheiten 13 in oder an dem Funktionsteil 18. Das Befestigungsteil 7 kommt dadurch ohne integrierte Funktionseinheit aus und kann sich hinsichtlich seiner Funktionen auf die Befestigung und die Fluidführung beschränken. Dies ermöglicht eine sehr einfache Herstellung und die Einhaltung kleiner Abmessungen.

Um im Bereich des Befestigungsteils 7 eine fluiddichte Verbindung zu erhalten, wird zweckmäßigerweise zwischen dem Gehäuse 45 und sowohl dem Schraubenkopf 27 als auch dem Gehäuse 4 des Arbeitszylinders 1 je ein vom Schaft 25 des Befestigungsteils 7 durchsetzter Dichtungsring 49 platziert. Der Schaft 25 kann im Bereich des Gewindeabschnittes 26 eine Ringnut 50 aufweisen, um dort einen Dichtungsring unverlierbar fixieren zu können.

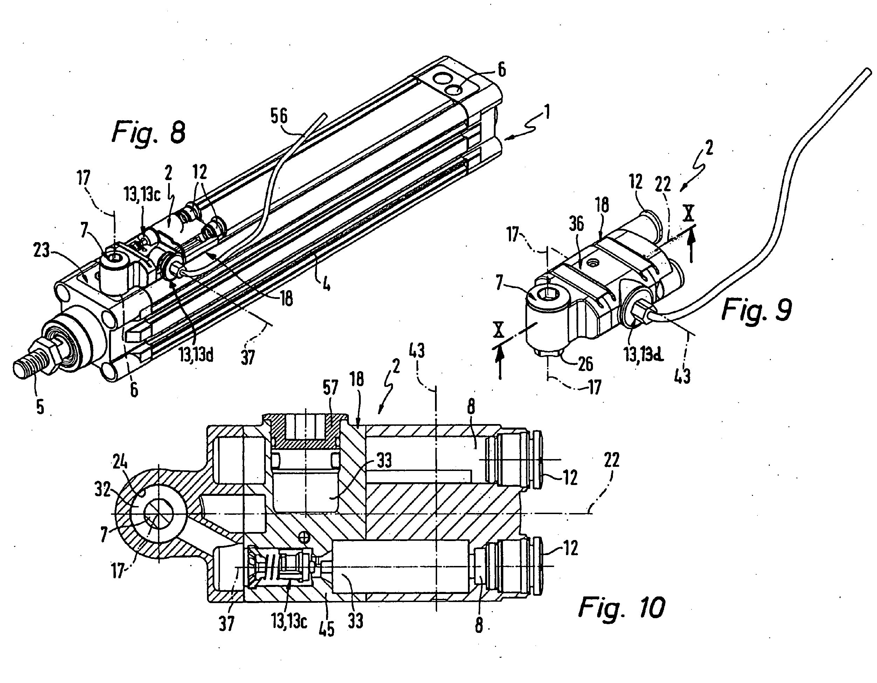

Die bisherige Beschreibung gilt in entsprechender Weise für die in Fig. 8 bis 13 abgebildeten Ausführungsbeispiele, wobei einander entsprechende Komponenten mit übereinstimmenden Bezugszeichen versehen sind. Die folgenden Ausführungen beziehen sich auf Modifikationen oder Ergänzungen bezüglich des Ausführungsbeispiels der Fig. 1 bis 7.

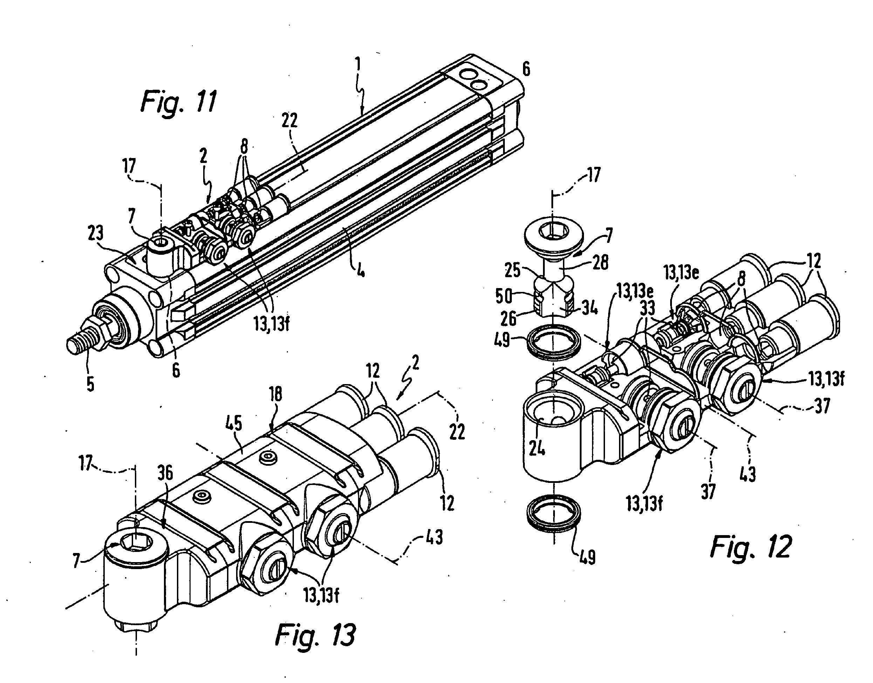

Die Ausführungsbeispiele der Fig. 8 bis 13 verdeutlichen unter anderem die Möglichkeit zu einer Mehrfachanordnung-von Anschlussöffnungen 8 an dem Funktionsteil 18. So sind gemäß Fig. 8 bis 10 jeweils zwei und beim Ausführungsbeispiel der Fig. 11 bis 13 insgesamt drei Anschlussöffnungen 8 vorgesehen, die zweckmäßigerweise jeweils gleich ausgerichtet sind und deren Längsachsen vorzugsweise parallel zur Hauptachse 22 des Funktionsteils 18 verlaufen. Jede dieser Anschlussöffnungen 8 eignet sich für den lösbaren Anschluss einer nicht näher dargestellten Fluidleitung, insbesondere im Zusammenhang mit einer Mehrfachbestückung des Funktionsteils 18 an Funktionseinheiten 13 unterschiedlichster Art.

So ist die erfindungsgemäße Anschlussvorrichtung 2 gemäß Fig. 8 und 9 beispielsweise mit einem fluidisch entsperrbaren Rückschlagventil 13c ausgestattet, wobei eine der Anschlussöffnungen 8 für die Einspeisung des fluidischen Entsperrsignals dient. Zusätzlich ist als weitere Funktionseinheit ein Drucksensor 13d in das Funktionsteil 18 eingebaut, der über eine Signalleitung 56 ein Sensorsignal abgeben kann.

Die Bauform der Fig. 10 hat eine ähnliche Ausstattung, wobei dort allerdings auf einen Drucksensor verzichtet wurde und die zu dessen Montage vorgesehene Ausnehmung stattdessen mittels eines Stopfens 57 verschlossen ist.

Bei dem Ausführungsbeispiel der Fig. 11 bis 13 sind in das Funktionsteil 18 ein oder mehrere aktiv betätigbare Steuerventile 13e integriert, denen jeweils als weitere Funktionseinheit eine Handhilfsbetätigungseinrichtung 13f zugeordnet ist.

Allen Ausführungsbeispielen ist wiederum gemeinsam, dass die Längsachsen 37 der verschiedenen Funktionseinheiten 13 rechtwinkelig zur Befestigungsachse 17 orientiert sind, wobei sie zweckmäßigerweise entweder in Richtung der Hauptachse 22 oder in Richtung der Querschnitts-Längsachse 43 ausgerichtet sind.

Eine besonders flache Bauform des Funktionsteils 18 mit sehr geringer Bauhöhe ergibt sich insbesondere dann, wenn die Längsachsen 37 sämtlicher Funktionseinheiten 13 und zweckmäßigerweise auch die Längsachsen der Anschlussöffnungen 8 in einer gemeinsamen Ebene liegen, die im rechten Winkel zu der Befestigungsachse 17 ausgerichtet ist. Dies gilt im Übrigen auch für die anhand der Fig. 1 bis 7 illustrierte Bauform.

## Patentansprüche

1. Anschlussvorrichtung zum Anschließen mindestens einer Fluidleitung an eine fluidtechnische Komponente, beispielsweise einen fluidbetätigten Arbeitszylinder, mit einem sich in Richtung einer Befestigungsachse (17) erstreckenden, zur Fixierung an der fluidtechnischen Komponente und gleichzeitig zur Fluidführung vorgesehenen Befestigungsteil (7) und mit einem in Richtung einer zu der Befestigungsachse (17) rechtwinkeligen Hauptachse (22) von dem Befestigungsteil (7) wegragenden Funktionsteil (18), an dem mindestens eine zum Anschließen einer Fluidleitung geeignete Anschlussöffnung (8) vorgesehen ist, und das mit mindestens einer mit dem im Funktionsteil (18) strömenden Fluid zusammenwirkenden Funktionseinheit (13) ausgestattet ist, die so ausgerichtet ist, dass ihre Längsachse (37) rechtwinkelig zur Befestigungsachse (17) des Befestigungsteils (7) verläuft, wobei das Funktionsteil (18) Flachgestalt aufweist und quer zu seiner Hauptachse (22) über einen länglichen Querschnitt verfügt, dessen Querschnitts-Längsachse (43) rechtwinkelig zur Befestigungsachse (17) ausgerichtet ist, **dadurch gekennzeichnet, dass** als Funktionseinheit (13) in dem Funktionsteil (18) mindestens ein zur Druckerfassung oder zur Durchflusserfassung dienender Sensor (13d) angeordnet ist.

2. Anschlussvorrichtung nach Anspruch 1 , **dadurch gekennzeichnet, dass** mindestens eine Funktionseinheit (13) als Drosseleinrichtung (13a) ausgebildet ist, die eine einstellbare Drosselschraube (14) aufweist, deren Schraubenachse (15) rechtwinkelig zur Befestigungsachse (17) des Befestigungsteils (7) verläuft.

3. Anschlussvorrichtung nach Anspruch 2, **dadurch gekennzeichnet, dass** die Schraubenachse (15) mit Abstand zur Befestigungsachse (17) quer und insbesondere rechtwinkelig zur Hauptachse (22) des Funktionsteils (18) verläuft.

4. Anschlussvorrichtung nach einem der Ansprüche 1 bis 3, **dadurch gekennzeichnet, dass** die mindestens eine Anschlussöffnung (8) rechtwinkelig zur Befestigungsachse (17) und zweckmäßigerweise in Richtung der Hauptachse (22) orientiert ist.

5. Anschlussvorrichtung nach einem der Ansprüche 1 bis 4, **dadurch gekennzeichnet, dass** das Befestigungsteil (7) als das Funktionsteil (18) durchsetzende Befestigungsschraube ausgebildet ist.

6. Anschlussvorrichtung nach Anspruch 5, **dadurch gekennzeichnet, dass** die Befestigungsschraube zur Fluidführung an ihrem Schaft (25) umfangsseitig mindestens eine längsverlaufende Strömungsvertiefung (34) aufweist.

7. Anschlussvorrichtung nach Anspruch 6, **dadurch gekennzeichnet, dass** an dem Schaft (25) der Befestigungsschraube zwei einander diametral gegenüberliegend platzierte Strömungsvertiefungen (34) vorgesehen sind.

8. Anschlussvorrichtung nach einem der Ansprüche 5 bis 7, **dadurch gekennzeichnet, dass** das Funktionsteil (18), wenigstens bei noch nicht festgezogener Befestigungsschraube, relativ zur Befestigungsschraube um die Befestigungsachse (17) verschwenkbar ist.

9. Anschlussvorrichtung nach einem der Ansprüche 1 bis 8, **dadurch gekennzeichnet, dass** als Funktionseinheit (13) in dem Funktionsteil (18) mindestens eine Drosseleinrichtung (13a) und/oder ein Rückschlagventil (13b) und/oder mindestens ein Steuerventil (13e) und/oder mindestens eine Handhilfsbetätigungseinrichtung (13f) angeordnet ist.

10. Anschlussvorrichtung nach einem der Ansprüche 1 bis 9, **dadurch gekennzeichnet, dass** das Funktionsteil (18) ein Gehäuse (45) aufweist, mit einem dem Befestigungsteil (7) zugeordneten Grundkörper (46) und einem stirnseitig in den Grundkörper (46) eingesetzten Deckel (47), wobei der Deckel (47) wenigstens eine Anschlussöffnung (8) aufweist.

11. Anschlussvorrichtung nach Anspruch 10, **dadurch gekennzeichnet, dass** der Deckel (47) an seiner Innenseite, in dem vom Grundkörper (46) umschlossenen Bereich, mindestens eine Komponente (54) einer Funktionseinheit (13) trägt.

12. Anschlussvorrichtung nach einem der Ansprüche 1 bis 11, **dadurch gekennzeichnet, dass** das Befestigungsteil (7) das Funktionsteil (18) an dessen Oberseite (36) in Richtung der Befestigungsachse (17) nicht oder nur geringfügig überragt.

13. Anschlussvorrichtung nach einem der Ansprüche 1 bis 12, **dadurch gekennzeichnet, dass** bei einer Ausgestaltung des Befestigungsteils (7) als Befestigungsschraube lediglich der Schraubenkopf (27) über die Oberseite (36) des Funktionsteils (18) vorsteht.

## Claims

1. Connecting device for connecting at least one fluid line to a fluid power component such as a fluid-actuated operating cylinder, with a mounting part (7) extending in the direction of a mounting axis (17) and designed both for securing to the fluid power component and for the guidance of the fluid, and with a functional part (18) projecting from the mounting part (7) in the direction of a main axis (22) extending at right angles to the mounting axis (17), on which functional part is provided at least one connecting port (8) for the connection of a fluid line, and which functional part is equipped with at least one functional unit (13) acting together with the fluid flowing in the functional part (18) and oriented such that its longitudinal axis (37) extends at right angles to the mounting axis (17) of the mounting part (7), wherein the functional part (18) has a flat shape and, at right angles to its main axis (22), an oblong cross-section with a longitudinal axis (43) oriented at right angles to the mounting axis (17), **characterised in that** at least one sensor (13d) for pressure or flow detection is provided as a functional unit (13) in the functional part (18).

2. Connecting device according to claim 1, **characterised in that** at least one functional unit (13) is designed as a restrictor (13a) with a restrictor screw (14), the axis (15) of which extends at right angles to the mounting axis (17) of the mounting part (7).

3. Connecting device according to claim 2, **characterised in that** the screw axis (15) extends at a distance from the mounting axis (17) transversely and in particular at right angles to the main axis (22) of the functional part (18).

4. Connecting device according to any of claims 1 to 3, **characterised in that** the at least one connecting port (8) is oriented at right angles to the mounting axis (17) and expediently in the direction of the main axis (22).

5. Connecting device according to any of claims 1 to 4, **characterised in that** the mounting part (17) is designed as a mounting screw passing through the functional part (18).

6. Connecting device according to claim 5, **characterised in that** the mounting screw has at least one longitudinal flow recess (34) for the guidance of fluid on the circumference of its shank (25).

7. Connecting device according to claim 6, **characterised in that** two flow recesses (34) placed diametrically opposite one another are provided in the shank (25) of the mounting screw.

8. Connecting device according to any of claims 5 to 7, **characterised in that** the functional part (18) is pivotable about the mounting axis (17) relative to the mounting screw at least as long as the mounting screw has not been tightened.

9. Connecting device according to any of claims 1 to 8, **characterised in that** at least one restrictor (13a) and/or at least one check valve (13b) and/or at least one control valve (13c) and/or at least one auxiliary manual control (13f) is/are provided as a functional unit (13) in the functional part (18).

10. Connecting device according to any of claims 1 to 9, **characterised in that** the functional part (18) comprises a housing (45) with a base body (46) assigned to the mounting part (7) and a cover (47) installed into the end face of the base body (46), the cover (47) including at least one connecting port (8).

11. Connecting device according to claim 10, **characterised in that** the inside of the cover (47) supports at least one component (54) of the functional unit (13) in the region enclosed by the base body (46).

12. Connecting device according to any of claims 1 to 11, **characterised in that** the mounting part (7) only slightly, if at all, projects over the top (36) of the functional part (18) towards the mounting axis (17).

13. Connecting device according to any of claims 1 to 12, **characterised in that** only the screw head (27) projects over the top (36) of the functional part (18) if the mounting part (7) is designed as a mounting screw.

## Revendications

1. Dispositif de raccordement pour le raccordement d'au moins un conduit de fluide à un composant fluidique par exemple un cylindre de travail actionné par fluide, avec une partie de fixation (7) s'étendant dans la direction d'un axe de fixation (17), prévue pour la fixation sur le composant fluidique et en même temps pour la conduite de fluide et avec une partie fonctionnelle (18) dépassant de la partie de fixation (7) dans la direction d'un axe principal (22) à angle droit par rapport à l'axe de fixation (17), sur laquelle est prévue au moins une ouverture de raccordement (8) appropriée au raccordement d'une conduite de fluide, et qui est équipée d'au moins une unité fonctionnelle (13) coopérant avec le fluide s'écoulant dans la partie fonctionnelle (18) qui est orientée de sorte que son axe longitudinal (37) s'étende à angle droit par rapport à l'axe de fixation (17) de la partie de fixation (7), la partie fonctionnelle (18) présentant une forme plate et disposant transversalement à son axe principal (22) d'une section oblongue, dont l'axe longitudinal de section (43) est orienté à angle droit par rapport à l'axe de fixation (17), **caractérisé en ce qu'**au moins un capteur (13d) servant à relever la pression ou à relever le débit est disposé comme unité fonctionnelle (13) dans la partie fonctionnelle (18).

2. Dispositif de raccordement selon la revendication 1, **caractérisé en ce qu'**au moins une unité fonctionnelle (13) est réalisée comme un dispositif d'étranglement (13a) qui présente une vis d'étranglement (14), dont l'axe de vis (15) s'étend à angle droit par rapport à l'axe de fixation (17) de la partie de fixation (7).

3. Dispositif de raccordement selon la revendication 2, **caractérisé en ce que** l'axe de vis (15) s'étend à distance de l'axe de fixation (17) transversalement et en particulier à angle droit par rapport à l'axe principal (22) de la partie fonctionnelle (18).

4. Dispositif de raccordement selon l'une des revendications 1 à 3, **caractérisé en ce que** l'au moins une ouverture de raccordement (8) est orientée à angle droit par rapport à l'axe de fixation (17) et de manière avantageuse dans la direction de l'axe principal (22).

5. Dispositif de raccordement selon l'une des revendications 1 à 4, **caractérisé en ce que** la partie de fixation (7) est réalisée comme une vis de fixation traversant la partie fonctionnelle (18).

6. Dispositif de raccordement selon la revendication 5, **caractérisé en ce que** la vis de fixation présente pour le guidage de fluide, sur sa tige (25) côté périphérie, au moins une cavité d'écoulement (34) s'étendant longitudinalement.

7. Dispositif de raccordement selon la revendication 6, **caractérisé en ce que** sur la tige (25) de la vis de fixation sont prévues deux cavités d'écoulement (34) placées de manière diamétralement opposée.

8. Dispositif de raccordement selon l'une des revendications 5 à 7, **caractérisé en ce que** la partie fonctionnelle (18) est pivotante au moins lorsque la vis de fixation n'est pas encore serrée à fond, par rapport à la vis de fixation, autour de l'axe de fixation (17).

9. Dispositif de raccordement selon l'une des revendications 1 à 8, **caractérisé en ce qu'**au moins un dispositif d'étranglement (13a) et/ou un clapet anti-retour (13b) et/ou au moins une soupape de commande (13e) et/ou au moins un dispositif d'actionnement auxiliaire manuel (13f) est disposé comme unité fonctionnelle (13) dans la partie fonctionnelle (18).

10. Dispositif de raccordement selon l'une des revendications 1 à 9, **caractérisé en ce que** la partie fonctionnelle (18) présente un boîtier (45) avec un corps de base (46) tourné vers la partie de fixation (7) et un couvercle (47) inséré côté frontal dans le corps de base (46), le couvercle (47) présentant au moins une ouverture de raccordement (8).

11. Dispositif de raccordement selon la revendication 10, **caractérisé en ce que** le couvercle (47) porte sur son côté intérieur, dans la zone entourée par le corps de base (46), au moins un composant (54) d'une unité fonctionnelle (13).

12. Dispositif de raccordement selon l'une des revendications 1 à 11, **caractérisé en ce que** la partie de fixation (7) ne dépasse pas ou dépasse seulement légèrement de la partie fonctionnelle (18) sur son côté supérieur (36) dans la direction de l'axe de fixation (17).

13. Dispositif de raccordement selon l'une des revendications 1 à 12, **caractérisé en ce** dans le cas d'une configuration de la partie de fixation (7) comme vis de fixation, juste la tête de vis (27) dépasse du côté supérieur (36) de la partie fonctionnelle (18).
